(19) Europäisches Patentamt
European Patent Office
Office européen des brevets

(11) **EP 4 521 119 A1**

(12) **EUROPEAN PATENT APPLICATION**
published in accordance with Art. 153(4) EPC

(43) Date of publication:
**12.03.2025 Bulletin 2025/11**

(21) Application number: **23799448.8**

(22) Date of filing: **21.04.2023**

(51) International Patent Classification (IPC):
*G01N 35/00* (2006.01)     *G01N 35/08* (2006.01)
*G01N 37/00* (2006.01)

(52) Cooperative Patent Classification (CPC):
**G01N 35/00; G01N 35/08; G01N 37/00**

(86) International application number:
**PCT/JP2023/015962**

(87) International publication number:
**WO 2023/214516 (09.11.2023 Gazette 2023/45)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.05.2022 JP 2022076057**

(71) Applicant: **Toppan Holdings Inc.**
**Tokyo 110-0016 (JP)**

(72) Inventors:
• **SHINOHARA, Yuichiro**
  **Tokyo 110-0016 (JP)**
• **WADA, Shinichi**
  **Tokyo 110-0016 (JP)**
• **GOTO, Keisuke**
  **Tokyo 110-0016 (JP)**
• **SUZUKI, Yuta**
  **Tokyo 110-0016 (JP)**

(74) Representative: **TBK**
**Bavariaring 4-6**
**80336 München (DE)**

(54) **DETECTION KIT, SEALING LIQUID, METHOD FOR PRESERVING SEALING LIQUID, AND METHOD FOR DETECTING SAMPLE**

(57)     A detection kit is used for detecting a target substance contained in a liquid sample and includes a fluid device that accommodates a sample, a detection reagent that reacts with the target substance, and an oil-based sealing liquid, in which the fluid device includes an internal space that accommodates a mixed aqueous solution of the sample and the detection reagent, an injection port and a discharge port that communicate with the internal space, and a plurality of wells that open to the internal space and accommodate the mixed aqueous solution, and a dissolved oxygen amount in the sealing liquid is 100 mg/L or less and a dissolved nitrogen amount in the sealing liquid is 260 mg/mL or less.

FIG. 1

EP 4 521 119 A1

## Description

Technical Field

The present invention relates to a detection kit, a sealing liquid, a method for preserving a sealing liquid, and a method for detecting a sample.
Priority is claimed on Japanese Patent Application No. 2022-076057, filed May 2, 2022, the content of which is incorporated herein by reference.

Background Art

A technology for detecting a biomolecule in a fluid device is known. For example, in DNA microarray technology, there is a case where a biomolecule is detected by introducing the biomolecule into a micropore and carrying out a reaction with heating.

In addition, there is known technology capable of detecting a biomolecule as a single molecule. Examples of such a technology include digital measurement technologies such as digital Enzyme-Linked ImmunoSorbent Assay (ELISA), digital Polymerase Chain Reaction (PCR), digital Invasive Cleavaged Assay (ICA), and the like which are disclosed in Non Patent Document 1.

The inventors previously developed a digital measurement technology using a reaction container (fluid device) having a plurality of wells (refer to Patent Document 1). In the previously developed method, first, an aqueous medium containing a target substance is fed into a flow channel of the fluid device, and a plurality of wells provided on a flow channel wall surface is filled with the aqueous medium. Subsequently, an oil-based sealing liquid is fed into the flow channel to seal the aqueous medium in the plurality of wells with the oil-based sealing liquid. With this, each well is set as a plurality of independent reaction spaces. In addition, a reaction solution is heated by heating the fluid device, and subjected to a detection reaction to carry out a detection of a target substance.

Citation List

Patent Document

Patent Document 1: PCT International Publication No. WO2015/115635

Non Patent Document

Non Patent Document 1: Large-scale femtoliter droplet array for digital counting of single biomolecules Soo Hyeon Kim, Lab Chip, 2012, 12, 4986-4991

Summary of Invention

Technical Problem

Meanwhile, in the method described in Patent Document 1, air bubbles may be generated in a fluid device when the fluid device is heated. The generated air bubbles are required to be improved because the generated air bubbles hinder a detection reaction and an observation, the improvement is required.

The present invention has been made in view of such circumstances, and an object of the present invention is to provide a detection kit capable of suppressing generation of air bubbles and performing measurement of a biomolecule with high accuracy. In addition, the object of the present invention is to provide a sealing liquid used in such a detection kit, a method for preserving a sealing liquid, and a method for detecting a sample using such a detection kit.

Solution to Problem

[1] A detection kit used for detecting a target substance contained in a liquid sample, the detection kit including a fluid device that is configured to accommodate the sample, a detection reagent that reacts with the target substance, and an oil-based sealing liquid, in which the fluid device has an internal space accommodating a mixed aqueous solution of the sample and the detection reagent, and a plurality of wells accommodating the mixed aqueous solution, and a dissolved oxygen amount in the sealing liquid is 100 mg/L or less and a dissolved nitrogen amount in the sealing liquid is 260 mg/mL or less.

[2] The detection kit according to [1], in which air bubbles are not visually confirmable in the sealing liquid by the following method.

(Confirmation method)

(1) 1.5 mL of the sealing liquid is put into a 1.5 mL microtube and is sealed.
(2) Heating is performed at 66°C for 25 minutes.
(3) Presence or absence of air bubbles in the sealing liquid is visually confirmed.

[3] The detection kit used for detecting a target substance contained in a liquid sample, the detection kit including a fluid device that accommodates the sample, a detection reagent that reacts with the target substance, and an oil-based sealing liquid, in which the fluid device includes an internal space that accommodates a mixed aqueous solution of the sample and the detection reagent, an injection port and a discharge port that communicate with the internal space, and a plurality of wells that open to the internal space and accommodate the mixed aqueous solution, and air bubbles are not visually confirmable in the sealing liquid by the following method.

(Confirmation method)

(1) 1.5 mL of the sealing liquid is put into a 1.5 mL microtube and is sealed.
(2) Heating is performed at 66°C for 25 minutes.
(3) Presence or absence of air bubbles in the sealing liquid is visually confirmed.

[4] The detection kit according to any one of [1] to [3], in which the sealing liquid is sealed to be accommodated in a preservation container, and internal pressure of the preservation container in which the sealing liquid is accommodated is $2.0 \times 10^2$ Pa or less.

[5] The detection kit according to any one of [1] to [4], in which the sealing liquid is a fluorine-based oil.

[6] The detection kit according to any one of [1] to [5], in which a material of the fluid device is a gas-impermeable resin.

[7] The detection kit according to any one of [1] to [6], in which a contact angle of the sealing liquid with respect to a surface facing the internal space is 5° or more and 80° or less.

[8] The detection kit according to any one of [1] to [7], in which the plurality of wells have the same shapes in a plan view and are disposed in a matrix shape, and any first well and a second well closest to the first well satisfy the following expression (1).

$$0.8 \leq Da/Dab < 1 \ ... \ (1)$$

(Da represents an equivalent circle diameter of an opening portion of the first well, and Dab represents a distance between a centroid of the opening portion of the first well and a centroid of the opening portion of the second well.)

[9] The detection kit according to [8], in which the Da is 1 $\mu$m or more and 50 $\mu$m or less.

[10] The detection kit according to any one of [1] to [9], in which a volume per the well is 1 fL or more and 6 pL or less.

[11] An oil-based sealing liquid used in the detection kit according to any one of [1] to [10], in which a dissolved oxygen amount is 100 mg/L or less and a dissolved nitrogen amount is 260 mg/mL or less.

[12] The sealing liquid according to [11], in which air bubbles are not visually confirmable by the following method.

(Confirmation method)

(1) 1.5 mL of the sealing liquid is put into a 1.5 mL microtube and is sealed.
(2) Heating is performed at 66°C for 25 minutes.
(3) Presence or absence of air bubbles in the sealing liquid is visually confirmed.

[13] The sealing liquid according to [11] or [12], in which the sealing liquid is sealed to be accommodated in a preservation container in which internal pressure is $2.0 \times 10^2$ Pa or less.

[14] A method for preserving a sealing liquid, in which the sealing liquid according to any one of [11] to [13] is preserved at a temperature of 15°C or higher.

[15] A method for detecting a sample in which a target substance contained in a liquid sample is detected, the method including a step of adjusting a mixed aqueous solution of a detection reagent reacting with the target substance and the sample, a step of filling wells with the mixed aqueous solution of the sample and the detection reagent, by using a fluid device that includes an internal space accommodating the mixed aqueous solution, an injection port and a discharge port communicating with the internal space, and a plurality of wells open to the internal space and accommodating the mixed aqueous solution, by introducing the mixed aqueous solution into the internal space, a step of sealing the mixed aqueous solution in the wells with the sealing liquid by introducing an oil-based sealing liquid into the fluid device, and a step of detecting the target substance by heating the fluid device to allow the target substance and the detection reagent to react with each other, in which a dissolved oxygen amount in the sealing liquid is 100 mg/L or less and a dissolved nitrogen amount in the sealing liquid is 260 mg/mL or less.

[16] The method for detecting a sample according to [15], in which air bubbles are not visually confirmable in the sealing liquid by the following method,

(Confirmation method)

(1) 1.5 mL of the sealing liquid is put into a 1.5 mL microtube and is sealed.
(2) Heating is performed at 66°C for 25 minutes.
(3) Presence or absence of air bubbles in the sealing liquid is visually confirmed.

[17] The method for detecting a sample according to [15] or [16], in which the sealing liquid is a fluorine-based oil.
[18] The method for detecting a sample according to any one of [15] to [17], further including a step of deaerating the sealing liquid before the sealing step.
[19] The method for detecting a sample according to any one of [15] to [18],
in which in the detecting step, a reaction temperature between the target substance and the detection reagent is 50°C or higher and 99°C or lower. Advantageous Effects of Invention

According to the present invention, it is possible to provide a detection kit capable of suppressing generation of air bubbles and performing the measurement of a biomolecule with high accuracy. In addition, it is possible to provide a sealing liquid used in such a detection kit, a method for preserving a sealing liquid, and a method for detecting a sample using such a detection kit.

Brief Description of Drawings

FIG. 1 is a schematic perspective view showing a detection kit according to an embodiment.
FIG. 2 is a cross-sectional diagram of a fluid device included in the detection kit.
FIG. 3 is a plan view showing a part of a plurality of micro-wells 110.
FIG. 4 is an explanatory diagram of a method for detecting a sample according to the present embodiment.
FIG. 5 is an explanatory diagram of the method for detecting a sample according to the present embodiment.
FIG. 6 is an explanatory diagram of the method for detecting a sample according to the present embodiment.
FIG. 7 is a schematic diagram showing an example of an ICA reaction.
FIG. 8 is a photograph showing an evaluation result.
FIG. 9 is a photograph showing an evaluation result.

Description of Embodiments

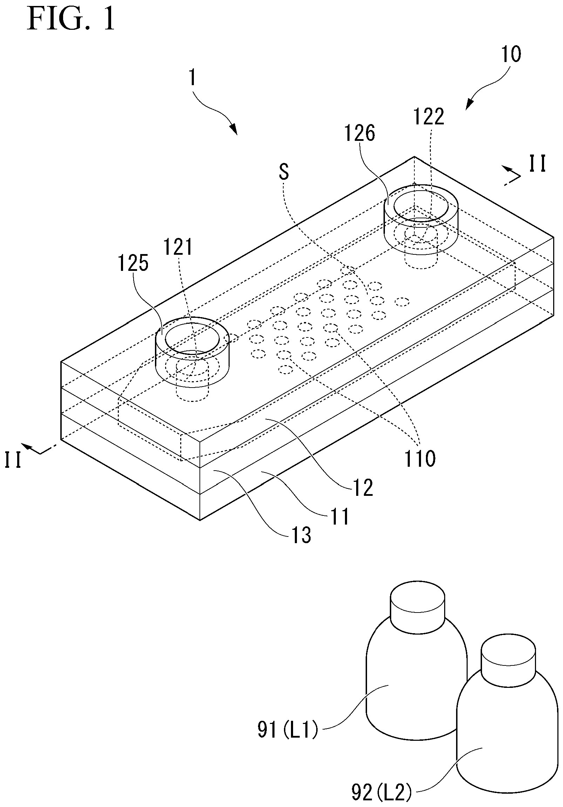

In the present specification, in a case where a numerical range is described as "1 to 10 $\mu$m", it means a range of 1 $\mu$m to 10 $\mu$m, and means a numerical range including 1 $\mu$m as a lower limit value and 10 $\mu$m as an upper limit value.
Hereinafter, a detection kit, a sealing liquid, a method for preserving a sealing liquid, and a method for detecting a sample according to the present embodiment will be described with reference to FIGS. 1 to 6. In all the drawings below, the dimensions and ratios of each constituent element are appropriately different in order to make the drawings easier to see.

<Detection kit, sealing liquid, and method for preserving sealing liquid>

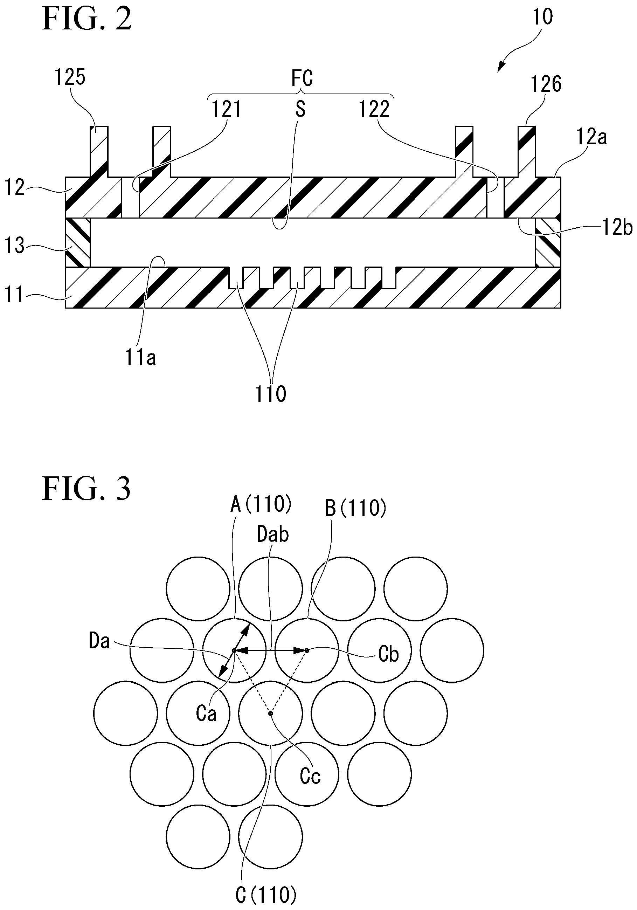

FIG. 1 is a schematic perspective view showing the detection kit according to the present embodiment. FIG. 2 is a cross-sectional diagram of a fluid device included in the detection kit, and is an arrow cross-sectional diagram taken along a line segment II-II of FIG. 1.
A detection kit 1 includes a fluid device 10, a detection reagent L1, and an oil-based sealing liquid L2. Each of the detection reagent L1 and the sealing liquid L2 is preserved in, for example, preservation containers 91 and 92. The detection kit 1 is used for detecting a target substance contained in a liquid sample.
The sample is an aqueous solution containing a target substance, and examples thereof include a biological sample and an environmental sample. The biological sample is not particularly limited, and examples thereof include serum, plasma, urine, and a cell culture solution. In addition, the sample may be a PCR reaction solution and the like using a biological sample as a template and containing a reagent for dyeing as a detection reagent. In addition, examples of the environmental sample include river water, industrial wastewater, and the like.

Examples of the target substance include DNA, RNA, protein, virus, cell, exosome, and the like. Here, examples of RNA include miRNA, mRNA, and the like. In addition, examples of the cell include bacteria, yeast, animal cells, plant cells, insect cells, and the like.

In the fluid device 10, the detection kit 1 allows the target substance contained in the above-described sample to react with the detection reagent L1 to detect a target substance. At this time, in the detection kit 1, the sealing liquid L2 is used to form a reaction field suitable for the reaction between the target substance and the detection reagent L1, thereby facilitating detection of the target substance.

A description will be given below in order.

[Fluid device]

As shown in FIGS. 1 and 2, the fluid device 10 includes a well plate 11, a lid member 12, and a wall member 13. The fluid device 10 is used as a reaction container that accommodates a sample in an internal space S and carries out a detection reaction of a target substance contained in the sample.

(Well plate)

The well plate 11 is a plate-like member having a rectangular shape or a strip shape in a plan view. The term "plan view" refers to a visual field of an upper surface 11a of the well plate from a vertical direction. On the upper surface 11a of the well plate 11, a plurality of wells (also referred to as micro-wells) 110 is provided at a center of the well plate 11 in a longitudinal direction.

Micro-wells 110 are recesses provided on the upper surface 11a of the well plate 11 and are open on the upper surface 11a. The micro-well 110 refers to a space surrounded by the recess and an imaginary plane parallel to the upper surface 11a and in contact with the upper surface 11a.

The micro-well 110 accommodates a sample accommodated in the internal space S therein and functions as a reaction field between a target substance contained in the sample and the detection reagent L1.

A material of the well plate 11 is preferably hydrophobic. Specifically, it is preferable that the material constituting the upper surface 11a of the well plate **11** has a contact angle with the sealing liquid L2 of 5° or greater and 80° or less. When the well plate 11 is formed with such a material, the contact angle between the upper surface 11a and the sealing liquid L2 is 5° or greater and 80° or less. When the contact angle of the upper surface 11a is within the range, the sample tends to be easily isolated in the micro-well 110 in a case where the sealing liquid is introduced into the internal space S by the method described below.

In addition, the contact angle is determined by measurement using the sealing liquid L2 instead of water according to an intravenous drip method defined in JIS R3257-1999.

Specifically, the following operation is performed. 4 μL or less of the sealing liquid L2 is added dropwise to a flat plate test piece made of the same material as that of the well plate 11 horizontally placed to create liquid droplets. The following two values are measured with respect to the present liquid droplets.

r = radius of surface in contact with test piece of liquid droplets (mm)

h = height from surface of test piece to apex of liquid droplets (mm)

Using the obtained r and h, a contact angle $\theta$ is calculated from the following expression (1). $\theta = 2\tan^{-1}(h/r)$

The material of the well plate 11 may or may not have electromagnetic wave transmittance. Here, examples of electromagnetic wave for which the transmittance is to be determined include X-rays, ultraviolet rays, visible light rays, infrared rays, and the like. In a case where the well plate 11 has electromagnetic wave transmittance, it is possible to use electromagnetic wave to analyze experimental results carried out in the fluid device 10 having the well plate 11. For example, fluorescence, phosphorescence, and the like generated as a result of irradiating with an electromagnetic wave can be measured from the well plate 11 side. In addition, the term "electromagnetic wave transmittance" means a property capable of transmitting electromagnetic waves having various wavelengths, such as radio waves, light, X-rays, and gamma rays.

As will be described later in detail, for example, in a case where sample detection is carried out by generating fluorescence having a peak in a wavelength range of 400 to 700 nm, which is a visible light region, in the micro-well 110, a material having favorable transmittance with respect to light at least in the visible light region may be used.

Examples of the material having electromagnetic wave transmittance include glass, resin, and the like. Examples of the resin include an ABS resin, polycarbonate, a cycloolefin copolymer (COC), a cycloolefin polymer (COP), an acrylic resin, polyvinyl chloride, polystyrene, polyethylene, polypropylene, polyvinyl acetate, polyethylene terephthalate (PET), and polyethylene naphthalate (PEN), and the like. These resins may contain various additives, or may be polymer alloys in which a plurality of resins is mixed.

It is preferable that the material having electromagnetic wave transmittance substantially has no autofluorescence. Substantially has no autofluorescence means that the material has no autofluorescence of a wavelength used for sample detection at all, or even when the material has autofluorescence, the autofluorescence is so weak as not to affect the sample detection. For example, when the autofluorescence is about 1/2 or less, or more preferably 1/10 or less compared to fluorescence to be detected, it can be said that the autofluorescence is so weak as not to affect the sample detection. When the well plate 11 is formed using such a material, it is possible to increase detection sensitivity in the sample detection using electromagnetic waves.

Examples of the material having electromagnetic wave transmittance and not emitting autofluorescence include quartz glass and the like. Examples of a material which has weak autofluorescence and does not interfere with sample detection using electromagnetic waves include low fluorescence glass, an acrylic resin, a cycloolefin copolymer (COC), a cycloolefin polymer (COP), cast polypropylene (CPP), and the like.

A thickness of the well plate 11 can be appropriately determined. In a case where the fluorescence is observed from the well plate 11 side using a fluorescence microscope, the thickness of the well plate 11 may be, for example, 5 mm or less, 2 mm or less, or 1.6 mm or less.

Furthermore, the material of the well plate 11 is preferably a gas-impermeable resin. In the present embodiment, the "gas impermeability" is evaluated by using a gas permeation coefficient represented by the following definition. The gas permeation coefficient can be obtained based on a method described in JIS K 7126-1:2006 "Plastics-Film and sheeting-Determination of gas-transmission rate- Part 1: Differential-pressure method" or ISO 15105-1:2002, Plastics-Films and sheeting-Determination of gas-transmission rate-Part 1: Differential-pressure method.

For an oxygen permeation coefficient, a material can be suitably used as a "gas-impermeable resin" as long as the material satisfies the following criteria. Oxygen permeation coefficient $\leq$ 0.1 ($cm^3$(stp)·100 $\mu$m/$m^2$·24 hr·MPa)

It is preferable that the well plate 11 is formed of such a resin, since the dissolution of air (more specifically, oxygen) with respect to the sealing liquid L2 can be suppressed during the work and measurement using the fluid device 10, and the measurement accuracy is easily maintained.

The well plate 11 may have a single-layer configuration using only the materials described above, or may be a laminate of a plurality of materials. In a case where the laminate is processed to form the well plate 11, a layer having the micro-wells 110 and a layer supporting the layer may be made of different materials. In this case, the material of the layer having the micro-wells 110 is preferably hydrophilic (the contact angle with water is 70° or more and 180° or less) that is easily wet by water.

(Micro-well)

As a shape of the micro-well 110, various shapes can be adopted. Examples of the shape of the micro-well 110 can include a tubular shape such as a cylindrical shape, an elliptical tubular shape, and a polygonal tubular shape, a weight shape such as a conical shape and a pyramid shape, a trapezoidal shape such as a truncated cone shape and a truncated pyramid shape, and the like. In a case where the micro-well 110 has a weight shape or a trapezoidal shape, the shape may be a shape in which an opening diameter gradually decreases in a depth direction of the well.

A bottom portion of the micro-well 110 may be flat, or may have a curved surface (specifically, a convex surface or a concave surface).

In a case where the micro-well 110 has a cylindrical shape, a maximum diameter of the micro-well 110 in a plan view is, for example, preferably 10 nm to 100 $\mu$m, more preferably 100 nm to 50 $\mu$m, and still more preferably 1 $\mu$m to 20 $\mu$m. In addition, a depth of the micro-well 110 is, for example, preferably 10 nm to 100 $\mu$m, more preferably 100 nm to 50 $\mu$m, and further more preferably 1 $\mu$m to 20 $\mu$m.

A volume of the micro-well 110 is, for example, preferably 1 fL or more and 6 nL or less, more preferably 1 fL or more and 5 pL or less, further more preferably 1 fL or more and 2 pL or less, and particularly preferably 1 fL or more and 300 fL or less. When the volume of one micro-well 110 is in such a range, it is possible to suitably carry out an enzymatic reaction carried out in a micro-space such as digital PCR and an invader reaction. It is possible to carry out gene mutation detection and the like, for example, by the digital PCR.

The volume of the micro-well 110 can be calculated by measuring a dimension of the micro-well 110 using a scanning electron microscope or a phase contrast microscope.

The well plate 11 has the plurality of micro-wells 110 with the same shapes and the same sizes. The same shapes and the same sizes may be the same shapes and the same volumes to an extent required for carrying out digital measurement, and variations to an extent of manufacturing error are allowed.

A density of the micro-wells 110 is, for example, 100,000 to 10,000,000 pieces/$cm^2$, preferably 100,000 to 5,000,000 pieces/$cm^2$, and more preferably 100,000 to 1,000,000 pieces/$cm^2$. When the density of the micro-wells 110 is within such a range, it is easy to carry out operation of encapsulating a sample in a predetermined number of the micro-wells 110. In addition, it is also easy to observe the wells for analyzing experimental results.

For example, in a case where a presence proportion of mutation to be detected to a wild type is about 0.01% when mutation of a cell-free DNA is measured using the detection kit 1, it is suitable to use, for example, 1 to 2 million micro-wells 110.

FIG. 3 is a plan view showing a part of the plurality of micro-wells 110. As shown in FIG. 3, the plurality of micro-wells 110 in the well plate 11 have the same shapes in a plan view. Since the micro-wells 110 are used as an alignment mark in imaging or device manufacturing, among the plurality of micro-wells, a small number (for example, one to four) of the micro-wells may have different shapes.

In addition, the plurality of micro-wells 110 are regularly disposed in a matrix shape. Here, the expression "regularly disposed" of the micro-wells 110 means that the centroids of opening portions of the plurality of micro-wells 110 are disposed in a certain pattern.

For example, the centroids of the opening portions of the micro-wells 110 may be disposed in a square lattice shape. In this case, lines connecting centroids of opening portions of four micro-wells 110 adjacent to each other form a rectangle, preferably a square.

Alternatively, the centroids of the opening portions of the micro-wells 110 may be disposed in a triangular lattice shape (also referred to as a hexagonal lattice shape). In this case, lines connecting centroids of opening portions of three micro-wells 110 adjacent to each other form an equilateral triangle.

It is preferable that, among the plurality of micro-wells 110, any well (also referred to as a first well) A and a well (also referred to as a second well) B closest to the well A satisfy the following expression (1).

$$0.8 \leq Da/Dab < 1 \ ... \ (1)$$

(Da represents an equivalent circle diameter of an opening portion of the well A, and Dab represents a distance between a centroid of the opening portion of the well A and a centroid of an opening portion of the well B.)

In the well plate 11, a lower limit of a value of Da/Dab is 0.8, and may be 0.83. In addition, an upper limit of the value of Da/Dab is less than 1, and may be 0.92 or about 0.9. These lower limit value and upper limit value can be optionally combined. For example, Da/Dab may be 0.8 or more and less than 1, 0.83 or more and 0.92 or less, or 0.83 or more and 0.9 or less.

In a case where the above-described expression (1) is satisfied and the plurality of micro-wells 110 are disposed in a triangular lattice shape, the distance between a centroid of an opening portion of any micro-well 110 and a centroid of an opening portion of a micro-well 110 closest to the micro-well 110 is constant.

The micro-wells 110 shown in FIG. 3 are disposed in a triangular lattice shape. As shown in FIG. 3, in each of any well A, the well B closest to the well A, and a well C closest to both the well A and the well B, centroids Ca, Cb, and Cc of opening portions form an equilateral triangle with each of the centroids Ca, Cb, and Cc as an apex.

In FIG. 3, a line connecting the centroids Ca, Cb, and Cc of the opening portions in each of the well A, the well B, and the well C is an equilateral triangle.

In the well plate 11, an equivalent circle diameter of the opening portion of the micro-well 110 is preferably 1 μm or more and 50 μm or less. That is, a lower limit of the equivalent circle diameter of the opening portion of the micro-well 110 is preferably 1 μm.

In addition, an upper limit of the equivalent circle diameter of the opening portion of the micro-well 110 may be less than 20 μm, 19 μm or less, 18 μm or less, 17 μm or less, 16 μm or less, 15 μm or less, 14 μm or less, 13 μm or less, 12 μm or less, 11 μm or less, or 10 μm or less.

The upper limit value and the lower limit value of the equivalent circle diameter of the opening portion of the micro-well 110 can be optionally combined.

(Lid member)

The lid member 12 has the same contour shape (that is, a strip shape) as that of the well plate 11 in a plan view. The lid member 12 is disposed to face the upper surface 11a of the well plate 11 with a gap therebetween.

The lid member 12 has two through-holes penetrating in a thickness direction. Each of the two through-holes is provided on one end side and the other end side of the lid member 12 in a longitudinal direction. One through-hole is an injection port 121 used when injecting a liquid material into the internal space S of the fluid device 10, and the other through-hole is a discharge port 122 used when discharging the liquid material from the internal space S.

Here, the term "liquid material" corresponds to not only a liquid sample but also a detection reagent or a sealing liquid.

The injection port 121, the internal space S, and the discharge port 122 communicate with each other in this order, and as a whole form a flow channel FC. In the fluid device 10, a liquid material is caused to appropriately flow to the flow channel FC to carry out a detection reaction of a target substance. In a plan view, the plurality of micro-wells 110 is disposed between the injection port 121 and the discharge port 122.

A tubular injection port 125 that surrounds a periphery of the injection port 121 is provided on an upper surface 12a of the lid member 12. The injection port 125 communicates with the injection port 121. The injection port 125 is, for example, used for connection of a syringe when the internal space is filled with a liquid material by using the syringe filled with the liquid material.

Similarly, a tubular discharge port 126 that surrounds a periphery of the discharge port 122 is provided on the upper surface 12a of the lid member 12. The discharge port 126 communicates with the discharge port 122. The discharge port 126 is, for example, used for connection of a tube through which a liquid material flows when the liquid material is extracted from the internal space S.

As the material of the lid member 12, a material shown as an example of the material of the well plate 11 described above can be adopted. The material of the lid member 12 may be the same as or different from the material of the well plate 11.

In addition, the material of the lid member 12 may have or may not have electromagnetic wave transmittance.

In a case where the micro-wells 110 are observed in a bright field, at least one of the well plate **11** and the lid member 12 has light transmittance.

The material of the lid member 12 is preferably hydrophobic. Specifically, it is preferable that the material constituting a surface (that is, a lower surface 12b) of the lid member 12 facing the internal space S has a contact angle with the sealing liquid L2 of 5° or greater and 80° or less. When the lid member 12 is formed with such a material, the contact angle between the lower surface 12b and the sealing liquid L2 is 5° or greater and 80° or less. When the contact angle of the lower surface 12b is within the above range, in a case where a sealing liquid is introduced into the internal space S by a method to be described later, a sample tends to be easily isolated in the micro-well 110.

(Wall member)

The wall member 13 is formed in a closed annular shape in a plan view, and is disposed along an outer edge of the upper surface 11a of the well plate 11. In FIG. 1, a wall surface of the wall member 13 facing the internal space S is substantially rectangular in a plan view, and a width thereof gradually decreases on the injection port 121 side.

The wall member 13 is sandwiched between the well plate 11 and the lid member 12, and integrated with each other to form the fluid device 10. A space surrounded by the well plate 11, the lid member 12, and the wall member 13 is an internal space S in which a liquid sample is accommodated. The internal space S extends in a longitudinal direction of the well plate 11 along the strip-like well plate 11.

The wall member 13 functions as a wall surface of the internal space S and also functions as a spacer between the well plate 11 and the lid member 12. A height of the wall member 13, that is, a height of the internal space S may be, for example, 100 $\mu$m or less.

A material of the wall member 13 is not particularly limited, and for example, it is possible to suitably use a double-sided adhesive tape in which an acrylic-based adhesive is laminated on both sides of a core material film. Examples of the material of the core material film can include silicone rubber and acrylic foam. By forming the wall member 13 using such a material, the internal space S can be liquid-tightly formed.

In addition, as the material of the wall member 13, the same material as the above-described well plate 11 can be adopted. The wall member 13 formed of such a material can be integrated with the well plate 11 and the lid member 12 by adhesion with an adhesive, or by welding by heat welding, ultrasonic welding, laser welding, or the like.

In addition, the wall member 13 may be formed integrally with the well plate 11 and may constitute a part of the well plate 11. Similarly, the wall member 13 may be formed integrally with the lid member 12 and may constitute a part of the lid member 12.

The above-described well plate 11 can be manufactured using known injection molding, micro-imprinting technology, or nanoimprinting technology. In addition, the well plate 11 can be manufactured by forming the micro-wells 110 by etching using a known photolithography technology.

The lid member 12 described above can be manufactured by a known injection molding.

In a case where the wall member 13 is formed integrally with the lid member 12, the wall member 13 can be manufactured simultaneously with the lid member 12 by known injection molding. In a case where the wall member 13 is separate from the lid member 12, the wall member 13 can be manufactured by cutting out a double-sided adhesive tape in which an acrylic-based adhesive is laminated on both sides of the above-described core material film.

[Detection reagent]

The detection reagent L1 reacts with a target substance and is used for detecting the target substance. Examples of the detection reagent L1 include a buffer substance, an enzyme, a substrate, an antibody, an antibody fragment, and the like.

For example, in a case where the target substance is nucleic acid, the enzyme is selected according to contents of biochemical reaction in order to carry out the biochemical reaction such as an enzymatic reaction against a template nucleic acid related to the target substance. The biochemical reaction against the template nucleic acid is, for example, a reaction in which signal amplification occurs under conditions in which the template nucleic acid is present.

The detection reagent L1 is selected according to the detection reaction to be adopted. Specific examples of the detection reaction include an ICA method, a loop-mediated isothermal amplification (LAMP) method (trademark registration), a 5'→3' nuclease method (TaqMan (registered trademark) method), a fluorescent probe method, and the like.

[Sealing liquid and method for preserving sealing liquid]

It is preferable that the sealing liquid L2 is oil-based and does not mix with, or is difficult to mix with, the aqueous sample. The sealing liquid L2 covers an opening portion of the micro-well 110 accommodating a mixed aqueous solution of a sample and a detection reagent L1 therein, and has a function of individually sealing such that the mixed aqueous solutions accommodated inside the micro-well 110 are not mixed with each other.

The sealing liquid L2 is preferably oil. As the oil, fluorine-based oil, silicone-based oil, hydrocarbon-based oil, a mixture thereof, and the like can be used. Specific examples of the sealing liquid include fluorine-based liquids such as FC-40, FC-43, FC-770, FC-72, and FC-3283 (all of which are manufactured by 3M) and KF96 (manufactured by Shin-Etsu Chemical Co., Ltd.).

In addition, as the sealing liquid L2, mineral oil and the like used for a PCR reaction and the like can also be used.

As a result of the studies by the inventors, it was found that, in a case where heating is performed for detecting a target substance, when a sealing liquid containing a certain amount or more of minute air bubbles (also referred to as air bubble precursors) which can be air bubbles is injected into the fluid device before the heating, bubbles which hinder the detection reaction and the observation are likely to be generated. Specifically, it is considered that, when the sealing liquid is heated, a gas dissolved in the sealing liquid volatilizes toward the air bubble precursor, and the air bubbles grow into air bubbles with a visually recognizable size by expanding the air bubbles.

The sealing liquid L2 has a dissolved oxygen amount of 100 mg/L or less and a dissolved nitrogen amount of 260 mg/mL or less.

The dissolved oxygen amount is more preferably 80 mg/L or less and still more preferably 60 mg/L or less. The dissolved oxygen amount is preferably small, and theoretically may be at least a detection limit or less, but may be 20 mg/L or more because it is easy to adjust. The upper limit value and the lower limit value of the dissolved oxygen amount can be optionally combined. That is, the dissolved oxygen amount may be 20 mg/L or more and 80 mg/L or less, or may be 20 mg/L or more and 60 mg/L or less.

The dissolved nitrogen amount is more preferably 200 mg/L or less and still more preferably 150 mg/L or less. The dissolved nitrogen amount is preferably small, and theoretically may be at least a detection limit or less, but may be 50 mg/L or more because it is easy to adjust.

The upper limit value and the lower limit value of the dissolved nitrogen amount can be optionally combined. That is, the dissolved nitrogen amount may be 50 mg/L or more and 200 mg/L or less, or may be 50 mg/L or more and 150 mg/L or less.

The dissolved oxygen amount and the dissolved nitrogen amount in the sealing liquid L2 can be measured under the conditions described in examples, by using gas chromatography (for example, GC-2014AT, manufactured by Shimadzu Corporation).

It is preferable that the sealing liquid L2 included in the detection kit 1 is adjusted such that air bubbles are not visually confirmable when heating is performed under the following conditions.

(Conditions)

(1) 1.5 mL of the sealing liquid is put into a 1.5 mL microtube and is sealed.
(2) Heating is performed at 66°C for 25 minutes.
(3) Presence or absence of air bubbles in the sealing liquid is visually confirmed.

The sealing liquid L2 adjusted as described above is sealed to be accommodated in the preservation container 92. Internal pressure of the preservation container 92 accommodating the sealing liquid L2 is $2.0 \times 10^2$ Pa or less. That is, the sealing liquid is sealed to be accommodated in a preservation container in which internal pressure is $2.0 \times 10^2$ Pa or less. The internal pressure can be measured using a known internal pressure measuring device (for example, KDM30 (manufactured by Krone Co., Ltd.)). For a lower limit of the internal pressure, various values can be adopted depending on pressure resistance of the preservation container 92. The lower limit of the internal pressure may be, for example, $1 \times 10^4$ Pa or more, or $1 \times 10^3$ Pa or more. An upper limit value and the lower limit value of the internal pressure can be optionally combined, and may be, for example, $1 \times 10^4$ Pa or more and $2.0 \times 10^2$ Pa or less, or $1 \times 10^3$ Pa or more and $2.0 \times 10^2$ Pa or

less.

When the sealing liquid L2 is preserved, the sealing liquid L2 is sealed in the preservation container 92 in a state of the internal pressure described above, and is preserved at a temperature of 15°C or higher. A preservation temperature of the sealing liquid L2 may be 20°C or higher or 30°C or higher. In addition, the preservation temperature of the sealing liquid L2 may be 70°C or lower or 40°C or lower. An upper limit value and a lower limit value of the preservation temperature can be optionally combined. For example, the preservation temperature of the sealing liquid L2 may be 20°C or higher and 70°C or lower, or may be 30°C or higher and 40°C or lower. By preserving the sealing liquid L2 under such conditions, re-dissolution of oxygen or nitrogen in air in the sealing liquid L2 can be suppressed, and detection of the target substance can be suitably performed.

When the storage is performed in the preservation container 92, it is desirable that a volume of the sealing liquid is larger than air volume in the container to prevent the air in the container from being dissolved in the sealing liquid. The volume of the sealing liquid may be 1.01 times or more and 10 times or less the air volume in the container, and is preferably 1.01 times or more and 5 times or less, more preferably 1.01 times or more and 2 times or less, and still more preferably 2 times or less. In addition, when the storage is performed in the preservation container 92, a surface area in the preservation container may be 1 time or more with respect to an area in which the air in the container and the sealing liquid are in contact with each other.

A material of the preservation container 92 is selected from a resin such as polyethylene (PE), polyvinyl chloride (PVC), PP, or PET, a metal, and glass. In a case where the material of the preservation container 92 is a resin, the resin is more preferably a gas-impermeable resin.

<Method for detecting sample>

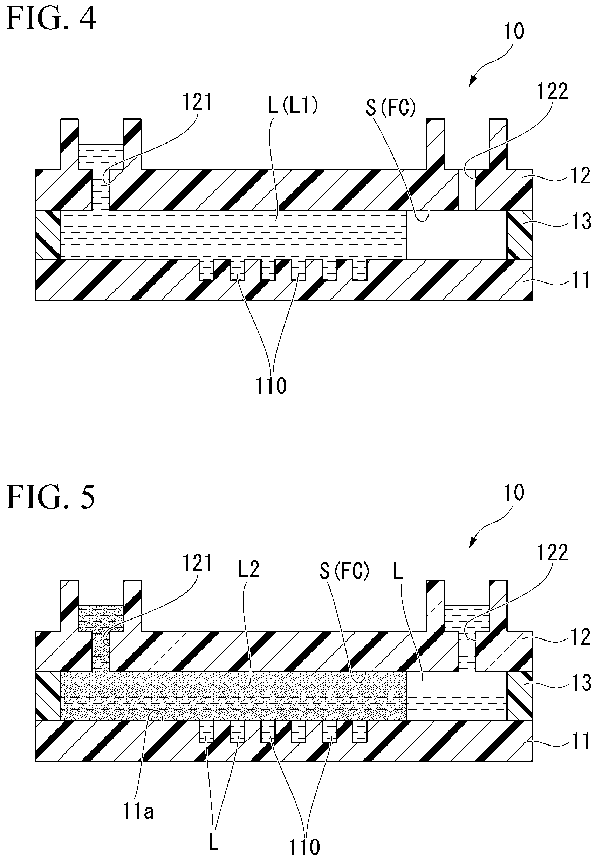

FIGS. 4 to 6 are explanatory diagrams of the method for detecting a sample according to the present embodiment. The method for detecting a sample according to the present embodiment is for detecting a sample in which a target substance contained in a liquid sample is detected, and includes the following steps.

(1) A step of adjusting a mixed aqueous solution of the detection reagent L1 that reacts with a target substance and a sample

(2) a step of filling the micro-well 110 with the mixed aqueous solution, by using the fluid device 10 that includes the internal space S accommodating the mixed aqueous solution, the injection port 121 and a discharge port communicating with the internal space S, and the plurality of micro-wells 110 open to the internal space and accommodate the mixed aqueous solution, by introducing the mixed aqueous solution into the internal space S

(3) A step of sealing the mixed aqueous solution in the micro-well 110 with the sealing liquid L2 by introducing the sealing liquid L2 into the fluid device 10

(4) A step of heating the fluid device 10, and causing a reaction between the target substance and the detection reagent L1 to detect the target substance

The method for detecting a sample is performed using the above-described detection kit 1.

(1) Step of adjusting mixed aqueous solution

First, the liquid sample and the detection reagent L1 are mixed to adjust a mixed aqueous solution. A concentration of the detection reagent L1 in the mixed aqueous solution is appropriately adjusted depending on the type of the detection reagent L1 to be used and the type of detection reaction.

The detection reagent L1 to be used may contain an adsorption inhibitor. The adsorption inhibitor has a function of suppressing the adsorption of the target substance, enzyme, or the like contained in the mixed aqueous solution to the member. Examples of the adsorption inhibitor include a surfactant and protein.

In order to facilitate detection of the target substance, the sample may be pretreated before the adjustment of the mixed aqueous solution. Examples of the pretreatment include concentration adjustment (dilution or thickening), supporting by a carrier, binding reaction of two or more types of target substances, filtration sterilization by filtering, pH adjustment, denaturation (annealing) of the target substance by heat treatment, and the like.

(2) Step of filling micro-well with mixed aqueous solution

Subsequently, as shown in FIG. 4, a mixed aqueous solution L containing a detection reagent L1 is injected from the injection port 121 into the internal space S. In a case where the mixed aqueous solution L flows in the internal space S (that is, flow channel FC), the micro-well 110 opening in the internal space S is also filled with the mixed aqueous solution L.

After the internal space S and all the micro-wells 110 are filled with the mixed aqueous solution L, the mixed aqueous solution L having passed through the flow channel FC is discharged from the discharge port 122.

At this time, it is preferable to adjust a concentration of the mixed aqueous solution L in advance so that the inside of one micro-well 110 is filled with one target substance. For example, in a case where there is a result that quantification of the target substance is difficult due to a high concentration of the mixed aqueous solution L after carrying out the method for detecting a sample described later, the result is used as a preliminary experimental result, and the mixed aqueous solution L is diluted.

By the above operation, one micro-well 110 is filled with one or less, that is, 0 or 1 target substance. With this, the number of micro-wells 110 in which the detection reaction described later was confirmed corresponds to the number of the target substances so that detection of the target substances can be carried out in one unit, that is, digital measurement is possible. The target substance does not need to be introduced into all micro-wells 110.

Means for introducing the target substance into the micro-wells 110 is not particularly limited, and appropriate means can be selected according to the target substance to be detected. Examples thereof include a method in which the target substance is precipitated in the fluid device 10 (specifically, in the flow channel FC) by its own weight and distributed into micro-wells.

In addition, using a substance that captures the target substance (also referred to as capture substance), the capture substance is bound to the target substance that is difficult to be precipitated by its own weight, and the capture substance may be fed. In addition, it is possible to improve the efficiency of introducing the target substance into the micro-wells 110 by fixing the capture substance in advance on the micro-wells and capturing the target substance fed together with the mixed aqueous solution L into the capture substance.

The reaction of binding the capture substance and the target substance can be carried out at any time point. For example, the reaction may be carried out by bringing the target substance and the capture substance into contact with each other in the sample tube before adjusting the mixed aqueous solution.

Alternatively, after introducing the capture substance into the micro-well 110, the target substance may be introduced into the micro-well 110 and the capture substance and the target substance may be brought into contact with each other in the micro-well 110.

The capture substance is a substance capable of capturing the target substance. The capture substance may be, for example, a binding body of a solid phase and a specific binding substance to the target substance.

Examples of the solid phase constituting the capture substance include particles, films, substrates, and the like. In addition, the specific binding substance to the target substance may be one type or two or more types. For example, the binding substance may be three types, may be four types, or may be five or more types.

The particle is not particularly limited, and examples thereof include a polymer particle, a magnetic particle, a glass particle, and the like. The particle is preferably a particle subjected to a surface treatment to avoid non-specific adsorption. In addition, in order to fix the specific binding substance, a particle having a functional group such as a carboxyl group on the surface is preferable. More specifically, product name "Magnosphere LC300" manufactured by JSR Corporation and the like can be used.

In addition, for example, in a case where a virus is used as the target substance, a cell to which the virus can adhere (that is, a cell having a virus receptor) may be used as the capture substance.

(3) Step of sealing mixed aqueous solution in micro-well 110

Subsequently, as shown in FIG. 5, the sealing liquid L2 is subjected to liquid feeding from the injection port 121 into the flow channel FC. The sealing liquid L2 fed to the flow channel FC flows in a surface direction of the upper surface 11a in the internal space S, and the mixed aqueous solution L that is not accommodated in the micro-well 110, of the mixed aqueous solution L fed to the flow channel FC is pushed away and substituted.

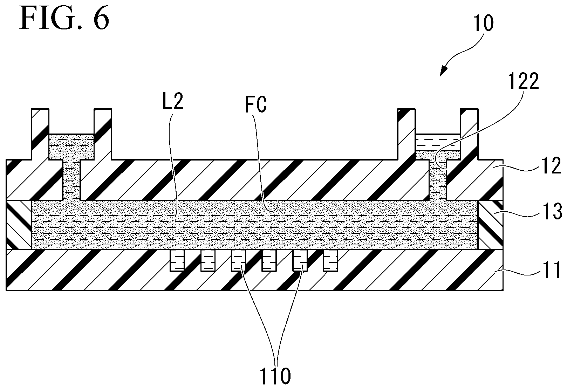

With this, the sealing liquid L2 individually seals each of the plurality of micro-wells 110 accommodating the mixed aqueous solution L containing the target substance, and the micro-wells 110 serve as independent reaction spaces. In a case where the flow channel FC is filled with the sealing liquid L2, excess sealing liquid L2 is discharged from the discharge port 122. FIG. 6 shows a state in which all of the plurality of micro-wells 110 are sealed with the sealing liquid L2 and all of the flow channel FC is substituted with the sealing liquid L2.

When the sealing liquid L2 is injected, the sealing liquid L2 may be slowly injected so that the sealing liquid L2 does not contain air bubbles in the internal space S. After the injection of the sealing liquid L2, it is visually confirmed that the sealing liquid L2 does not contain air bubbles by the injection work.

At this time, the used sealing liquid L2 is preferably a sealing liquid L2 included in the above-described detection kit 1, in particular, fluorine-based oil. It is preferable that the sealing liquid L2 is adjusted such that air bubbles are not visually confirmable when heating is performed under the following conditions.

(Conditions)

(1) 1.5 mL of the sealing liquid is put into a 1.5 mL microtube and is sealed.
(2) Heating is performed at 66°C for 25 minutes.
(3) Presence or absence of air bubbles in the sealing liquid is visually confirmed.

The sealing liquid L2 has a dissolved oxygen amount of 100 mg/L or less and a dissolved nitrogen amount of 260 mg/mL or less, as described above.

(4) Step of detecting target substance

Subsequently, the fluid device 10 is heated to cause a reaction between the target substance and the detection reagent L1. In this case, the sealing liquid L2 that seals the micro-well 110 suppresses the generation of air bubbles due to heating as described above. Therefore, in the step of detecting the target substance, the generation of air bubbles in the sealing liquid L2 is suppressed, and the target substance can be detected with high accuracy.

As a method for detecting a target substance, it is possible to use any known detection method according to the characteristics of the target substance to be detected. For example, first, the method for detecting a target substance can be carried out by carrying out a reaction of amplifying a target substance-derived signal at a detectable level (also referred to as signal amplification reaction) depending on the necessity, and then detecting the amplified signal using appropriate means.

Examples of the signal that can be used in the detection method according to the present embodiment include fluorescence, chemiluminescence, color development, potential change, pH change, and the like.

The signal amplification reaction may be, for example, a biochemical reaction, and more specifically an enzymatic reaction. As an example, the signal amplification reaction is an isothermal reaction in which a fluid device is maintained in a state in which a sample solution including an enzyme for signal amplification is accommodated in the well, under certain temperature conditions with which a desired enzyme activity is obtained, for example, at 60°C or higher, preferably at about 66°C, for a predetermined time, for example, at least 10 hours, preferably for about 15 minutes.

In a case where a reaction of detecting nucleic acid is used, specific examples of the signal amplification reaction include an ICA reaction such as an Invader (registered trademark) method, a LAMP (trademark registration) method, a TaqMan (registered trademark) method, a fluorescent probe method, and the like.

As the signal amplification reaction, the ICA reaction is particularly preferably used. In the ICA reaction, signal amplification proceeds through a cycle of two reactions of (1) complementary binding between nucleic acids and (2) recognition and cleavage of a triple-stranded structure by an enzyme. In such a signal amplification reaction, the influence of reaction cycle inhibition by contaminants other than the target substance is small. Therefore, even in a case where various components (that is, contaminants) other than the target substance are present in the micro-wells 110, the target substance can be detected with high accuracy by using the ICA reaction.

For example, in a case where the ICA reaction is used for the signal amplification reaction, the mixed aqueous solution L contains reaction reagents and template nucleic acid required for the ICA reaction. In a case where the biochemical reaction in the reaction step is an ICA reaction, by an enzymatic reaction due to an isothermal reaction, and in a case where a target substance is present in the well, by the fluorescent substance being released from a quenching substance, a predetermined fluorescent signal is emitted corresponding to an excitation light.

In a case where the ICA reaction is used for the signal amplification reaction, the reaction temperature between the target substance and the detection reagent is preferably 50°C or higher and 99°C or lower.

Hereinafter, the ICA reaction will be described in more detail.

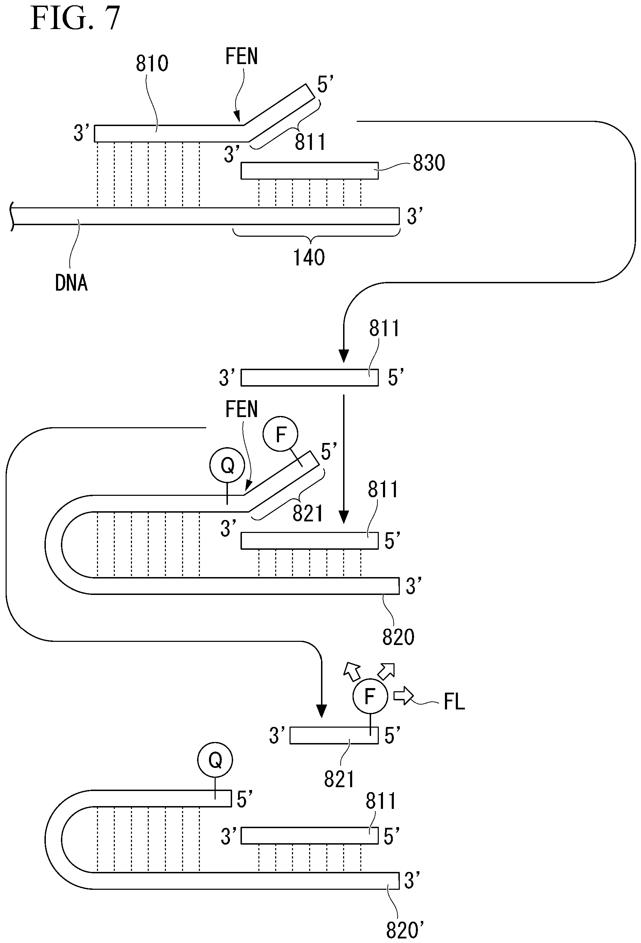

FIG. 7 is a schematic diagram showing an example of the ICA method. FIG. 7 shows an aspect in which a DNA serving as a target substance is detected by an ICA method.

Examples of reaction reagents necessary for the ICA reaction include ICA reaction reagents such as a flap probe 810, a flap endonuclease FEN, a fluorescent substrate 820, an invasion probe (invader oligo) 830, and the like.

The flap probe 810 and the invasion probe 830 are nucleic acid fragments (oligonucleotides) designed to hybridize with DNA (target DNA) which is a target substance to form a flap structure with a double-stranded nucleic acid 140.

The fluorescent substrate 820 is a nucleic acid fragment that has a hairpin structure and in which a fluorescent substance F and a quenching substance Q are bound to each other. In the fluorescent substrate 820 shown in FIG. 7, the fluorescent substance F is bound to a 5' terminal of the nucleic acid fragment, and the quenching substance Q is bound to several bases 3' side from the 5' terminal. The quenching substance Q suppresses the luminescence of the fluorescent substance F.

First, the flap probe 810 and the invasion probe 830 are hybridized to target DNA. The flap probe 810 and the invasion probe 830 each overlap by one base at an SNP site of the target DNA, and form an unstable tribasic structure. As a result, a first flap site 811 is formed. The first flap site 811 is a portion of the flap probe 810 that does not hybridize with the target DNA.

Subsequently, FEN recognizes the tribasic structure and reacts therewith. As a result, the first flap site 811 is cleaved to generate a nucleic acid fragment 811, and the nucleic acid fragment 811 is released into the mixed aqueous solution L.

The generated nucleic acid fragment 811 hybridizes with the fluorescent substrate 820. The nucleic acid fragment 811 invades the hairpin structure of the fluorescent substrate 820 and overlaps with one base at the SNP site to form an unstable tribasic structure. As a result, a second flap site 821 is formed. The second flap site 821 is a portion of the fluorescent substrate 820 that does not hybridize due to the invasion of the nucleic acid fragment 811.

Subsequently, FEN recognizes the tribasic structure and reacts therewith. As a result, the second flap site 821 is cleaved and a nucleic acid fragment 821 is generated. In FIG. 7, the remaining portion obtained by cleaving the nucleic acid fragment 821 from the fluorescent substrate 820 is indicated by reference numeral 820'.

As a result, the fluorescent substance F is separated from the quenching substance Q, and a fluorescence FL is generated. The target DNA can be detected by detecting this fluorescence FL.

In addition, the detection of the target substance can be carried out by binding a substance that specifically binds to the target substance (also referred to as a specific binding substance) to the target substance and detecting the bound specific binding substance. For example, in a case where the target substance is a protein, the protein can be detected using ELISA. More specifically, the detection may be carried out by, for example, sandwich ELISA using the FRET principle.

In a case of carrying out the sandwich method using the FRET principle, first, a first specific binding substance (for example, antibody) labeled with the first fluorescent substance (also referred to as donor) and a second specific binding substance labeled with the second fluorescent substance (also referred to as acceptor) having an adsorption wavelength overlapping the fluorescence wavelength of the first fluorescent substance are prepared.

Subsequently, the target substance (for example, antigen) is brought into contact with both the first specific binding substance and the second specific binding substance to form a composite body. In a case where a composite body is formed, a distance between the donor and the acceptor is reduced, and thus the fluorescence wavelength of the acceptor can be detected by irradiation with the excitation wavelength of the donor. Alternatively, the specific binding substance may be labeled with a nucleic acid fragment, and the nucleic acid fragment may be detected by the ICA reaction.

As the specific binding substance, the same specific binding molecule as the specific binding molecule for a structural body described later, for example, an antibody, an antibody fragment, an aptamer, and the like can be used. In order to detect a specific binding substance bound to a target substance, the specific binding substance may be directly or indirectly labeled with an enzyme such as horseradish peroxidase (HRP), for example. In a case where two or more specific binding substances are used, each of the specific binding molecules can be identifiably labeled from one another.

As a signal observation method, a known appropriate method can be selected depending on the type of the signal to be observed. For example, in a case of carrying out bright field observation, the base material on which a well array is provided is irradiated with white light in a vertical direction. In a case where a fluorescent signal is observed, the inside of the well is irradiated with excitation light corresponding to the fluorescent substance from a bottom side of the well, and the fluorescence emitted by the fluorescent substance is observed. An image of the whole or a part of the observed well array is captured and preserved, and image processing by a computer system is carried out.

In a case where the sealing liquid L2 is not suppressed from generating air bubbles by the preheating as described above, a step of deaerating the sealing liquid L2 may be provided before the step of sealing using the sealing liquid L2. The sealing liquid L2 can be deaerated by employing decompression, heating, ultrasonic irradiation, or a combination thereof.

With the detection kit 1 having the above-described configuration, it is possible to suppress the generation of air bubbles and to carry out the measurement of a biomolecule with high accuracy.

In addition, since the sealing liquid having the above-described configuration suppresses the generation of air bubbles due to heating, it is possible to carry out the measurement of a biomolecule with high accuracy by using the detection kit 1.

In addition, according to the method for preserving a sealing liquid having the above-described configuration, the sealing liquid in which the generation of the air bubbles is suppressed can be suitably preserved.

In addition, according to the method for detecting a sample, which has the above configuration, it is possible to carry out biomolecule measurement with high accuracy.

As described above, although preferred examples of the embodiments according to the present invention have been described with reference to the accompanying drawings, the present invention is not limited to such examples. The shapes, combinations, or the like of each of constituent members shown in the examples described above are examples, and can be variously changed based on the design, the specification, and the like within a range that does not deviate from the scope of the present invention.

Examples

Hereinafter, the present invention will be described with reference to Examples, but the present invention is not limited thereto.

[Manufacturing of fluid device]

Each of a well plate made of a cyclic polyolefin (product number "ZEONOR1020R", manufactured by ZEON CORPORATION) and a lid member made of a cyclic polyolefin (product number "ZEONOR1020R", manufactured by ZEON CORPORATION) was produced by injection molding. A thickness of the well plate was 0.6 mm.

A plurality of micro-wells were formed on one surface of the well plate by injection molding. An opening shape of the micro-well was set to a circle. For a size of the micro-well, a diameter was 10 $\mu$m and a depth was 15 $\mu$m. The plurality of micro-wells in a triangular lattice was disposed such that a distance between a center of each micro-well and a center of a micro-well closest to the micro-well is 12 $\mu$m, in a region of 6.0 mm $\times$ 30.0 mm on a substrate, and thereby a well array was formed.

A lid member was integrally formed with a wall member. By adjusting a height of the wall member to 30 $\mu$m, a height of a flow channel was set to 30 $\mu$m.

Subsequently, the well plate and the lid member (wall member) were bound to each other by laser welding to prepare fluid devices of Example 1 and Example 2.

[Adjustment of buffer]

An aqueous medium (that is, buffer) to be fed to the fluid device was adjusted according to the composition shown in Table 1.

[Table 1]

| Buffer composition | |
|---|---|
| Component | Final concentration |
| MgCl$_2$ | 20 mM |
| Tris pH 8.5 | 50 mM |
| Tween20 | 0.05 % |
| Distilled water | Residue |

[Measurement of dissolved gas concentration]

The dissolved oxygen concentration and the dissolved nitrogen concentration of the sealing liquid after the deaeration were measured by gas chromatography, and obtained by a calibration curve method. When the measurement was performed, a GC injection port was substituted with He to prevent contamination by the atmosphere.

In addition, the measurement sample was collected by using a syringe. The sampling position was set at a position at a depth of about 10 mm from the liquid level, and the sampling position was adjusted to be approximately the same by visual observation and manual operation.

(Measurement conditions)

Use device: GC-2014AT (Shimadzu Corporation)
Pre-column: Porapak Q
Column: Molecular Sieve 5A
Carrier gas: He
Injection port temperature: 170°C
Column temperature: 50°C
Detector: thermal conductivity detector (100 mA)

Detector temperature: 150°C
Measured sample amount: 20 μL

The following standard gas (primary gas) as a standard product of the component was diluted (2/201) with He gas using a vacuum bottle, and measured in the same manner as that of the sample to create a calibration curve.

(Standard gas)
Nitrogen and oxygen mixed gas: $O_2$ 21%, $N_2$ 79% (manufactured by Kansai Gas First, Ltd.)

The injection amount of each standard gas was as follows.

Primary gas: 20, 100, 200 μL
Dilution gas: 20, 100, 200 μL

For a component mass of the standard gas, the following calculation expression was used.

Component mass (g) = Component molecular weight (g/mol) × Standard gas concentration (%)/100 × Injection amount (L)/24.47 (L)

In the above-described expression, "24.47" is a volume of 1 mol of an ideal gas at 25°C (unit: L).
The dissolved gas concentration of the unprocessed sealing liquid stored in a state of room temperature was oxygen: 120 mg/L and nitrogen: 260 mg/L.

[Example 1]

As a sealing liquid, a fluorine oil (Fluorinert FC-40, manufactured by SIGMA-ALDRICH) was used.
The sealing liquid was deaerated by the following method.

(Deaeration method)

50 ml of the sealing liquid was placed in a screw bottle (SV-50A, manufactured by Nichiden-Rika Glass Co., Ltd.), and heated at 70°C for 2 hours using a hot plate.
The sealing liquid after the heating was cooled to room temperature, and the dissolved gas concentration was measured by the above-described method, and the dissolved gas concentration was oxygen: 100.0 mg/L and nitrogen: 260.0 mg/L.

(Confirmation method)

20 μL of the buffer having a composition shown in Table 1 was injected into a flow channel of a fluid device. Next, 200 μL of the deaerated sealing liquid was injected into the fluid device into which the buffer had been injected, and the buffer in the flow channel was substituted with the sealing liquid.
Thereafter, the fluid device into which the sealing liquid was injected was disposed on a transparent heat plate (model number: MP-10DMFH-PG, manufactured by KITAZATO CORPORATION) heated to 66°C, and allowed to stand for 25 minutes.
The state of the fluid device after the heating in the flow channel was observed while being heated using the observation tool shown below, and the presence or absence of generation of air bubbles was visually confirmed.

(Observation tool)

USB camera: CMOS camera (model: DFK22AUC03, manufactured by Imaging Source) Lens: Ai Nikkor 105 mm f2.5 mm (manufactured by Nikon Corporation)
Illumination: metal halide lamp (model number: LSM210, manufactured by SUMITA OPTICAL GLASS, INC.)

[Comparative Example 1]

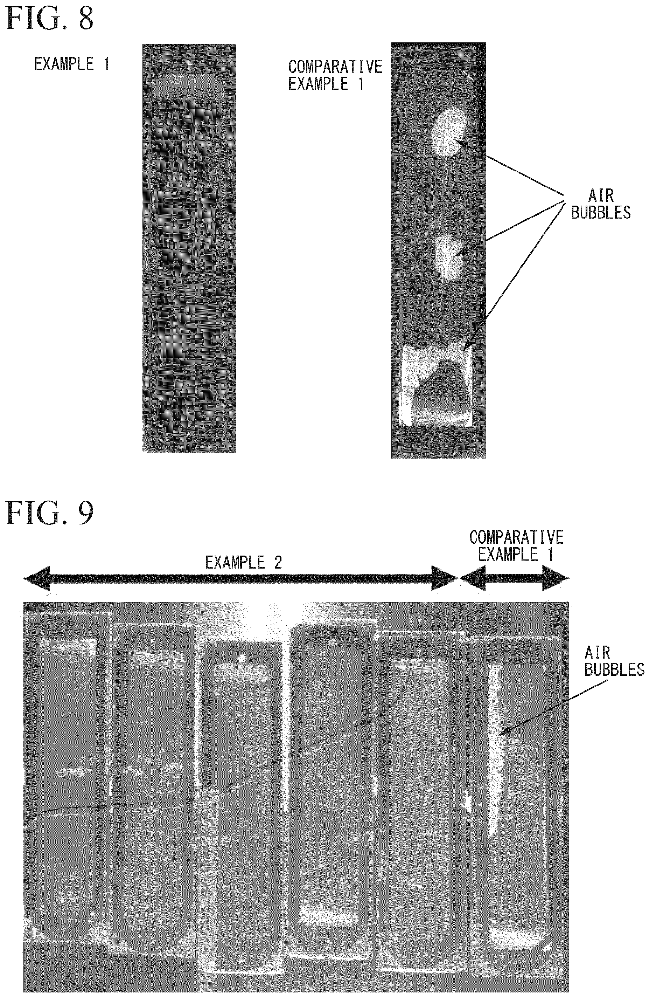

The presence or absence of generation of air bubbles was confirmed in the same manner as that in Example 1, except that the unprocessed sealing liquid stored in a state of room temperature was used. FIG. 8 is a photograph showing an evaluation result.

As a result of the evaluation, in the fluid device using the sealing liquid of Comparative Example 1, the air bubbles were generated, and in the fluid device using the sealing liquid of Example 1, the air bubbles were not generated.

[Example 2]

The sealing liquid was deaerated by the following method.

(Deaeration method)

A 50 ml screw tube bottle containing the sealing liquid was placed in a vacuum desiccator in an open state. The inside of the desiccator was depressurized using a rotary pump (model number: DW-120, manufactured by SATO VAC INC.), and the sealing liquid was stored for 6 days at initial pressure of $1.6 \times 10^2$ Pa.

The desiccator was returned to normal pressure, and the dissolved gas concentration of the sealing liquid after the decompression was measured by the above-described method, and the oxygen concentration was 5.0 mg/L and the nitrogen concentration was 8.6 mg/L.

The presence or absence of generation of the air bubbles was confirmed in the same manner as that in Example 1, except that the sealing liquid after the deaeration was used. FIG. 9 is a photograph showing an evaluation result. As a result of the evaluation, in the fluid device using the sealing liquid of Example 2, air bubbles were not generated.

From the above results, it was revealed that the present invention is useful.

Industrial Applicability

According to the present invention, it is possible to provide a detection kit capable of suppressing generation of air bubbles and performing the measurement of a biomolecule with high accuracy. In addition, it is possible to provide a sealing liquid used in such a detection kit, a method for preserving a sealing liquid, and a method for detecting a sample using such a detection kit.

Reference Signs List

1: Detection kit; 10: Fluid device; 91, 92: Preservation container; 110: Well (micro-well); 120: Well array; 121: Injection port; 122: Discharge port; A: Well (first well); B: Well (second well); Ca: Centroid; L: Mixed aqueous solution; L1: Detection reagent; L2: Sealing liquid; and S: Internal space

**Claims**

1. A detection kit used for detecting a target substance contained in a liquid sample, the detection kit comprising:

   a fluid device that is configured to accommodate the sample;
   a detection reagent that reacts with the target substance; and
   an oil-based sealing liquid,
   wherein the fluid device has an internal space accommodating a mixed aqueous solution of the sample and the detection reagent, and a plurality of wells accommodating the mixed aqueous solution, and
   a dissolved oxygen amount in the sealing liquid is 100 mg/L or less and a dissolved nitrogen amount in the sealing liquid is 260 mg/mL or less.

2. The detection kit according to Claim 1,
   wherein air bubbles are not visually confirmable in the sealing liquid by the following method,
   (Confirmation method)

   (1) 1.5 mL of the sealing liquid is put into a 1.5 mL microtube and is sealed,
   (2) Heating is performed at 66°C for 25 minutes, and
   (3) Presence or absence of air bubbles in the sealing liquid is visually confirmed.

3. The detection kit according to Claim 1 or 2,

   wherein the sealing liquid is sealed to be accommodated in a preservation container, and

internal pressure of the preservation container in which the sealing liquid is accommodated is $2.0 \times 10^2$ Pa or less.

4. The detection kit according to Claim 1,
   wherein the sealing liquid is a fluorine-based oil.

5. The detection kit according to Claim 1,
   wherein a material of the fluid device is a gas-impermeable resin.

6. The detection kit according to Claim 1,
   wherein a contact angle of the sealing liquid with respect to a surface facing the internal space is 5° or more and 80° or less.

7. The detection kit according to Claim 1,

   wherein the plurality of wells have the same shapes in a plan view and are disposed in a matrix shape, and any first well and a second well closest to the first well satisfy the following expression (1),

   $$0.8 \leq Da/Dab < 1 \ ... \ (1)$$

   (Da represents an equivalent circle diameter of an opening portion of the first well, and Dab represents a distance between a centroid of the opening portion of the first well and a centroid of an opening portion of the second well).

8. The detection kit according to Claim 7,
   wherein the Da is 1 $\mu$m or more and 50 $\mu$m or less.

9. The detection kit according to Claim 1,
   wherein a volume per the well is 1 fL or more and 6 pL or less.

10. The oil-based sealing liquid used in the detection kit according to Claim 1,
    wherein the dissolved oxygen amount is 100 mg/L or less and the dissolved nitrogen amount is 260 mg/mL or less.

11. The sealing liquid according to Claim 10,
    wherein air bubbles are not visually confirmable by the following method,
    (Confirmation method)

    (1) 1.5 mL of the sealing liquid is put into a 1.5 mL microtube and is sealed,
    (2) Heating is performed at 66°C for 25 minutes, and
    (3) Presence or absence of air bubbles in the sealing liquid is visually confirmed.

12. The sealing liquid according to Claim 10 or 11,
    wherein the sealing liquid is sealed to be accommodated in a preservation container in which internal pressure is $2.0 \times 10^2$ Pa or less.

13. A method for preserving a sealing liquid according to Claim 10,
    wherein the sealing liquid is preserved at a temperature of 15°C or higher.

14. A method for detecting a sample in which a target substance contained in a liquid sample is detected, the method comprising:

    a step of adjusting a mixed aqueous solution of a detection reagent reacting with the target substance and the sample;
    a step of filling wells with the mixed aqueous solution of the sample and the detection reagent, by using a fluid device that includes an internal space accommodating the mixed aqueous solution, an injection port and a discharge port communicating with the internal space, and a plurality of wells open to the internal space and accommodating the mixed aqueous solution, by introducing the mixed aqueous solution into the internal space;
    a step of sealing the mixed aqueous solution in the wells with the sealing liquid by introducing an oil-based sealing liquid into the fluid device; and
    a step of detecting the target substance by heating the fluid device to allow the target substance and the detection reagent to react with each other,
wherein a dissolved oxygen amount in the sealing liquid is 100 mg/L or less and a dissolved nitrogen amount in the sealing liquid is 260 mg/mL or less.

15. The method for detecting a sample according to Claim 14,
wherein air bubbles are not visually confirmable in the sealing liquid by the following method,
(Confirmation method)

(1) 1.5 mL of the sealing liquid is put into a 1.5 mL microtube and is sealed.
(2) Heating is performed at 66°C for 25 minutes.
(3) Presence or absence of air bubbles in the sealing liquid is visually confirmed.

16. The method for detecting a sample according to Claim 14 or 15,
wherein the sealing liquid is a fluorine-based oil.

17. The method for detecting a sample according to Claim 14, further comprising:
a step of deaerating the sealing liquid before the sealing step.

18. The method for detecting a sample according to Claim 14,
wherein in the detecting step, a reaction temperature between the target substance and the detection reagent is 50°C or higher and 99°C or lower.

FIG. 1

# FIG. 2

# FIG. 3

## FIG. 4

## FIG. 5

FIG. 6

# FIG. 7

## FIG. 8

EXAMPLE 1

COMPARATIVE
EXAMPLE 1

AIR
BUBBLES

## FIG. 9

EXAMPLE 2

COMPARATIVE
EXAMPLE 1

AIR
BUBBLES

## INTERNATIONAL SEARCH REPORT

| International application No. |
|---|
| **PCT/JP2023/015962** |

**A. CLASSIFICATION OF SUBJECT MATTER**

*G01N 35/00*(2006.01)i; *G01N 35/08*(2006.01)i; *G01N 37/00*(2006.01)i
FI:    G01N35/00 Z; G01N37/00 101; G01N35/08 A

According to International Patent Classification (IPC) or to both national classification and IPC

**B. FIELDS SEARCHED**

Minimum documentation searched (classification system followed by classification symbols)

G01N35/00; G01N35/08; G01N37/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2018-126132 A (F. HOFFMANN-LA ROCHE AG.) 16 August 2018 (2018-08-16)<br>entire text, all drawings | 1-18 |
| A | JP 2013-68546 A (SHARP CORP.) 18 April 2013 (2013-04-18)<br>entire text, all drawings | 1-18 |
| A | JP 2010-130925 A (OLYMPUS CORP.) 17 June 2010 (2010-06-17)<br>entire text, all drawings | 1-18 |
| A | JP 2021-511073 A (SNIPER (BEIJING) MEDICAL TECHNOLOGIES CO., LTD.) 06 May 2021 (2021-05-06)<br>entire text, all drawings | 1-18 |
| A | WO 2008/090922 A1 (TORAY INDUSTRIES, INC.) 31 July 2008 (2008-07-31)<br>entire text, all drawings | 1-18 |
| A | WO 2016/072416 A1 (TOPPAN PRINTING CO., LTD.) 12 May 2016 (2016-05-12)<br>entire text, all drawings | 1-18 |

☑ Further documents are listed in the continuation of Box C.      ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **26 May 2023** | **13 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2023/015962**

C.    DOCUMENTS CONSIDERED TO BE RELEVANT

| Category* | Citation of document, with indication, where appropriate, of the relevant passages | Relevant to claim No. |
|---|---|---|
| A | US 2006/0239865 A1 (KAHI, Johan-Valentin) 26 October 2006 (2006-10-26)<br>entire text, all drawings | 1-18 |

Form PCT/ISA/210 (second sheet) (January 2015)

INTERNATIONAL SEARCH REPORT
Information on patent family members

International application No.

**PCT/JP2023/015962**

| Patent document cited in search report | | | Publication date (day/month/year) | Patent family member(s) | | | Publication date (day/month/year) |
|---|---|---|---|---|---|---|---|
| JP | 2018-126132 | A | 16 August 2018 | US | 2018/0221875 | A1 | |
| | | | | entire text, all drawings | | | |
| | | | | EP | 3357575 | A1 | |
| | | | | CN | 108395984 | A | |
| JP | 2013-68546 | A | 18 April 2013 | (Family: none) | | | |
| JP | 2010-130925 | A | 17 June 2010 | (Family: none) | | | |
| JP | 2021-511073 | A | 06 May 2021 | US | 2021/0047680 | A1 | |
| | | | | entire text, all drawings | | | |
| | | | | EP | 3739323 | A1 | |
| | | | | CN | 110763667 | A | |
| WO | 2008/090922 | A1 | 31 July 2008 | US | 2010/0029503 | A1 | |
| | | | | entire text, all drawings | | | |
| | | | | EP | 2107373 | A1 | |
| | | | | KR | 10-2009-0113306 | A | |
| | | | | CN | 101578518 | A | |
| WO | 2016/072416 | A1 | 12 May 2016 | US | 2017/0233790 | A1 | |
| | | | | entire text, all drawings | | | |
| | | | | EP | 3216852 | A1 | |
| | | | | CN | 113549525 | A | |
| US | 2006/0239865 | A1 | 26 October 2006 | EP | 1596961 | A2 | |
| | | | | entire text, all drawings | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022076057 A

- WO 2015115635 A

**Non-patent literature cited in the description**

- **SOO HYEON KIM**. Large-scale femtoliter droplet array for digital counting of single biomolecules. *Lab Chip*, 2012, vol. 12, 4986-4991